# EUROPEAN PATENT APPLICATION

(11) **EP 0 778 219 A2**
(43) Date of publication of application: **11.06.1997**
(21) Application number: 96306884.6
(22) Date of filing: 20.09.1996
(51) Int. Cl.: B65D 47/08

(54) **Bottle cap and method of manufacture**

(30) Priority: 13.11.1995 KR 9541097; 13.11.1995 KR 9533305 U
(71) Applicant: Shin Dong Bang Corporation, Seoul (KR)
(72) Inventor: Yoo, Man-Jun, Kunpo-shi, Kyungki-do (KR); Lee, Yoon-Bum, Pusan-shi (KR); Im, Hyo-Bin, Anyang-shi, Kyungki-do (KR); Ban, Yeong-Hwa, Dongan-ku, Anyang-shi, Kyungki-do (KR); Jung, Chul-Won, Kwangjin-ku, Seoul (KR)
(74) Representative: Woodward, John Calvin

(57) **Abstract**

A bottle cap and injection molding process therefor. In the cap, the top cover (50) has an inside plug (53) which fits tightly into an opening (33) in the cap body (31). The cover also has a snap groove (55) which tightly engages with a snap hook (43) on the cap body thus preventing the cap from being accidentally opened so undesirable leakage from liquid from the bottle is prevented. In the injection molding process, liquid plastic is injected into top and bottom molds (110,130) through a gate (140) extending to the cavity part (114) corresponding to the pull-ring (61) of the tear-off piece. The pull-ring thus has a high tensile strength so that the ring cannot be accidentally separated from the tear-off piece (58) nor breaks when the ring is forcibly pulled upwardly in order to remove the tear-off piece.

## Description

The present invention relates in general to a cap for a bottle for containing a liquid such as an edible oil and, more particularly, to an improved cap which prevents the cap from opening should the bottle fall over onto its side or fall off the surface e.g. a table or shelf on which it is standing. The present invention also relates to a process for producing such a cap.

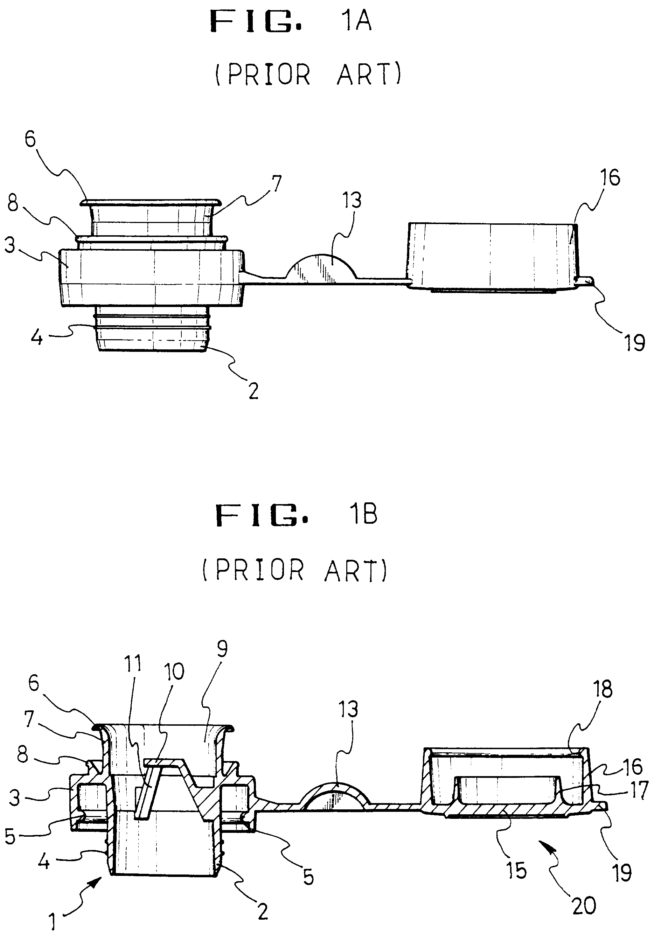

Japanese U.M. Laid-open Publication No. Sho. 55-108054 disclosed a bottle cap. As shown in Figures 1A and 1B, the cap comprises a body 1 and a cover 20. The cover 20, which covers the top of the cap body 1, is connected to the body 1 by a flexible connecting rib 13. The cap body 1, cover 20 and rib 13 are integrally formed.

The body 1 which fits on the bottle, consists of two concentric cylindrical members namely an inside cylinder 2 and a mouth covering skirt 3, which are formed into a single body. The lower portion of the inside cylinder 2 forms a fitting nipple, which locates tightly in the mouth of the bottle (not shown) when the cap is fitted to it. The mouth covering skirt 3 is exteriorly and concentrically formed on the middle portion of the inside cylinder 2 with an annular space between them. The skirt 3 is tightly fitted over the mouth of the bottle when the cap is fitted thereto. A plurality of annular protrusions 4 are formed on the outer wall of the fitting nipple which make a watertight seal with the inner wall of the bottle mouth when the nipple is fitted into it. As a result, the protrusions 4 not only make a watertight seal between the bottle mouth and the cap body 1, but they also prevent unwanted removal of the cap body 1 from the bottle mouth. A snap ring 5 is integrally formed with the inner wall of the skirt 3 and is adapted to make a snap engagement with the thickened lip of the bottle mouth whereby the ring 5 prevents unwanted separation of the cap body 1 from the bottle mouth.

The top of the inside cylinder 2 is flared to form an enlarged-diameter mouth 7. The root of the flared mouth 7 is surrounded by a cylindrical click member 8. The click member 8 is flared upwardly and is shaped to make a click engagement with thickened lip 18 of the cover 20. In order to prevent liquid in the bottle (not shown) from suddenly pouring out, regulating means 12 are provided in the liquid pouring opening 9 of the mouth 7. The regulating means 12 consists of a disc 10 and a leg 11.

The cover 20, which is connected to the body 1 by flexible connecting rib 13, consists of a circular top wall 15 and two concentric side walls 16 and 17. The outer side wall or skirt 16 extends from the edge of the top wall 15 and has the thickened lip 18 on its free edge. The thickened lip 18 can be brought into click engagement with the cylindrical click member 8 on the cap body 1. The inner side wall or plug 17 is formed inside the outer side wall 16 and is selectively fitted into the mouth 7 of the cap body 1 thus closing the opening 9. A finger-operable protrusion 19 is provided on the outer surface of the skirt 16.

In the above bottle cap, the regulating means 12 provided in the opening 9 of the cap body 1 regulates the flow rate of liquid when the liquid is poured out of the bottle (not shown) to which it is fitted. The cap thus appropriately regulates the liquid flow rate and direction from the bottle. However, the design of the plug 17 is such that the cover 20 can accidentally open should the bottle fall over onto its side wall or fall from the surface on which it is standing e.g. a table.

It is, therefore, a primary object of the present invention to provide a bottle cap in which the top cover tightly engages with the cap body thus preventing unwanted opening of the cap should a bottle with the cap fitted thereto accidentally fall over onto its side wall or fall from the surface on which it is standing.

It is another object of the present invention to provide an injection molding process for producing a bottle cap incorporating a tear-off piece including a pull-ring by providing a process in which liquid plastic is injected into top and bottom molds through a gate which extends into a cavity which corresponds to the pull-ring. The pull-ring thus has a high tensile strength so it cannot accidentally be separated from the tear-off piece nor can it break when the ring is pulled upwardly in order to remove the tear-off piece.

In order to accomplish the primary object, the present invention provides a bottle cap in which the cap body and a top cover are integrated into a single body by a flexible connecting rib.

According to a first aspect of the invention there is provided a bottle cap comprising a cap body including an inner cylindrical portion adapted to fit into the mouth of the bottle and defining a liquid pouring opening therein, an outer cylindrical mouth covering skirt connected to said inner cylindrical portion by an annular connector and a flexible connecting rib integrally connecting the top cover to the mouth covering skirt of the cap body characterised in that the top edge of the skirt is curved along its length to vary its height to providing two diametrically-opposed horizontal sections of different heights connected by a curved section, the top cover including a cylindrical inside plug adapted to fit into the liquid pouring opening in the cap body to close said opening, and an outside skirt surrounding said inside plug and having a curved edge shaped to fit into the curved edge of the mouth covering skirt of the cap body.

According to a second aspect of the invention there is provided a cap for fitting to a bottle containing liquid comprising a cap body including an inner cylindrical portion adapted to fit into the mouth of the bottle and defining a liquid pouring opening therein, an outer cylindrical mouth covering skirt connected to said inner cylindrical end portion by an annular connector, the top edge of said skirt being curved along its length to vary its height and providing two diametrically-opposed sections of different heights connected by a curved section and sealing means between said skirt and the annular connector for sealingly engaging the lip of a bottle when the cap is fitted thereto to prevent undesirable leakage therefrom, a top cover adapted operable to close the opening in the cap body said cover including a cylindrical inside plug adapted to fit into the liquid pouring opening in the cap body to close said opening and an outside skirt integrally surrounding said inside plug and having a curved edge shaped to fit into the curved edge of the mouth covering the skirt of the cap body and a flexible connecting rib integrally connecting the top cover to the mouth covering the skirt of the cap body.

In another embodiment, the height of the mouth covering skirt does not vary and a tear-off piece is provided in the liquid pouring opening in the inside cylinder to seal the opening. The tear-off piece is defined by a tearing groove. A pull-ring is connected to the tear-off piece by a connecting rib and is pulled upward to remove the tear-off piece along the defined tearing groove.

The present invention also provides an injection molding process for producing a bottle cap including a tear-off piece and a pull-ring connected thereto by means of a rib, said process comprising the steps of injecting liquid plastic into a cavity between top and bottom molds through a gate extending to a cavity corresponding to a part of said pull-ring, said part of the ring being diametrically opposite to said rib.

Other objects and aspects of the invention will become apparent from the following description of preferred embodiments thereof, by way of example only, with reference to the accompanying drawings, in which:
Figure 1A is a front view of a prior art bottle cap with the cover open;
Figure 1B is a sectional view of the cap of Figure 1A;
Figure 2 is a sectional view of a bottle cap of the invention with the cover open in accordance with a first embodiment of the present invention;
Figure 3 is a front view of the cap of Figure 2 in position on a bottle;
Figure 4 is a sectional view of a second embodiment of bottle cap of the invention with the cover open; and
Figure 5 is a sectional view of top and bottom molds used for injection molding the cap of Figure 4.

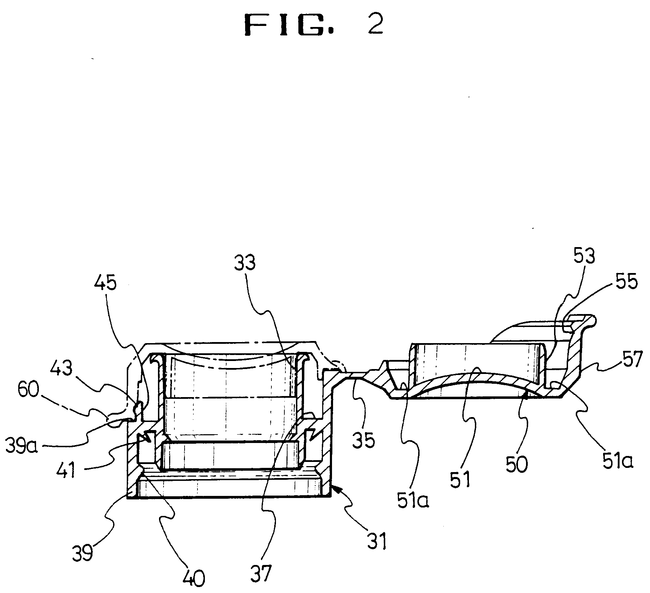

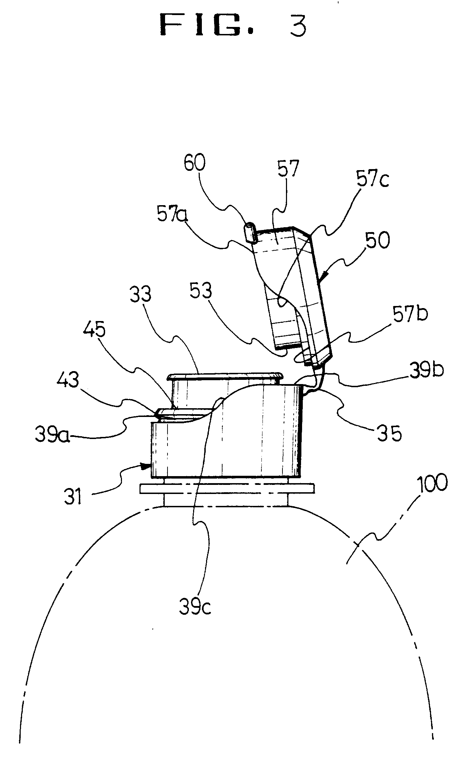

As shown in Figures 2 and 3, the cap comprises a cap body 31 and a top cover 50. The cap body 31 fits onto bottle 100 and the cover 50 selectively covers the top of the cap body 31 in order to close a central opening 33 therein. The cover 50 is connected to the body 31 by a flexible connecting rib 25. The cap body 31, cover 50 and rib 35 are integrally formed as a single structure.

Liquid can be poured out of the bottle 100 through the liquid pouring opening 33 when the bottle is tilted. The opening 33 is defined by the hollow inside cylindrical surface of the cap body 31. A cylindrical mouth covering skirt 39 is exteriorly and concentrically formed on the middle portion of the inside cylinder with an annular space between them. The skirt 39 is adapted to tightly fit over the mouth of the bottle 100 when the cap is placed on the bottle 100. The skirt 39 is connected to the inside cylindrical surface 33 by an annular connector 37.

In order to achieve a snap engagement between the cover 50 and the cap body 31, the cap body 31 is formed with a click member 45 which extends vertically upwardly from the top surface of the connector 37 so that it is partially formed on the forward part of the cap body 31 in front of the opening 33. The click member 45 is also concentric with the cylindrical opening 33 in the body 31 and its top end is thickened to form a snap hook 43. The snap hook 43 resiliently engages with the snap groove 55 on the cover 50 thus preventing accidental opening of the cover 50 should the bottle 100 accidentally fall over on its side or fall from the surface on which it is standing. The snap groove 55 is formed by horizontally grooving the inner surface of the flared skirt 57 of the cover 50. In the description of this invention, the part of the cap body 31 on the left-hand side of the drawings is referred to as the forward part of the body 31 and the opposite part on the right-hand side of the drawings is referred to as the rear part for ease of description.

The mouth covering skirt 39 of the cap body 31 has an annular protrusion 40 on its inside surface which is brought into snap engagement with an annular groove (not shown) formed under the thickened lip of the bottle 100 when the cap is placed thereon. Due to this protrusion 40, the cap body 31 is tightly located on the bottle 100. A packing member or sealing means 41 is provided on the inside corner between the skirt 39 and the annular connector 37 which is adapted to seal the junction between the cap body 31 and the thickened lip of the bottle 100, thereby preventing unwanted leakage of liquid from the bottle.

The top edge of the inside cylinder of the cap body 31 is bent outwardly so that the liquid in the bottle 100 can flow smoothly over the top edge when the liquid is poured out of the bottle. This top edge also comes into close contact with annular surface 51a, which is formed on the outside of the cylindrical inside plug 53 of the cover 50, when the cover 50 closes the opening 33 of the cap body 31. The liquid in the bottle 100 is thus prevented from leaking through the junction between the cap body 31 and the cover 50 even if the bottle 100 falls over.

The top surface of the skirt 39 in the cap body 31 is curved circumferentially in order to vary the height of the skirt 39. The top surface of the skirt 39 thus consists of three parts, namely, a lowest forward part 39a, a highest rear part 39b and a gently-curved intermediate part 39c.

The cover 50 comprises flared outside skirt 57, cylindrical inside plug 53 and top wall 51, which are integrally formed into a single structure. When the cover 50 closes the opening 33 in the cap body 31, snap groove 55 on the skirt 57 resiliently engages with the snap hook 43 on the cap body 31 and the inside plug 53 fits into and closes the opening 33. The top wall 51 is concave in shape to provide an arcuate cross-section. The plug 53 and skirt 57 are spaced apart from each other so that the annular surface 51a, formed between them, can be brought into close contact with the top edge of the inside cylinder of the cap body 31 when the cover 50 is folded over to close the opening 33 of the body 31 as described above. The cover 50 also has a finger-operable protrusion 60 formed on the edge of the skirt 57 which can be lifted by a user's finger to release the cover 50 and expose the opening 33.

As can be best seen in Figure 3, the edge of the skirt 57 of the cover 50 is curved in the same manner as the top surface of the mouth covering skirt 39 on the cap body 31. The edge of the skirt 57 consists of three parts, namely, the highest forward part 57a, lowest rear part 57b and the gently-curved intermediate part 57c. When the cover 50 is folded over to close the opening 33 in the cap body 31, the parts 57a, 57b and 57c of the skirt 57 substantially meet and interfit with the parts 39a, 39b and 39c of the mouth covering skirt 39, respectively.

Due to the curved configuration of the skirts 39 and 57, the inside plug 53 of the cover 50 can be smoothly inserted into the opening 33 in the cap body 31 to close it.

The operation of the cap will now be described hereinbelow.

In order to open the cover 50, (shown in its closed position shown in phantom in Figure 2) the user pulls the protrusion 60 upwardly and the snap groove 55 in the cover 50 is resiliently released from the snap hook 43 on the click member 45.

When the bottle 100 in the above state is tilted, liquid in the bottle can be poured out through the opening 33.

After pouring a desired quantity of liquid from the bottle, the opening 33 of the cap body 31 is closed by positioning the cover 50 over the body 31 and pressing it onto the body 31 so that the inside plug 53 is inserted into the opening 33 in the body 31. At the same time, the groove 55 in the cover 50 snaps into the snap hook 43 on the body 31 to watertightly close the opening 33.

In the above state, the parts 57a, 57b and 57c of the skirt 57 of the cover 50 meet with the parts 39a, 39b and 39c of the skirt 39 of the cap body 31 and interfit and cooperate with each other.

The above described cap reliably prevents undesirable leakage of liquid from the bottle 100 should it inadvertently fall over onto its side wall or fall from the surface on which it is standing. The cover 50 is prevented from opening because the inside plug 53 is tightly fitted into the opening 33 of the cap body 31, and the snap groove 55, tightly engages with the snap hook 43 on the cap body 31.

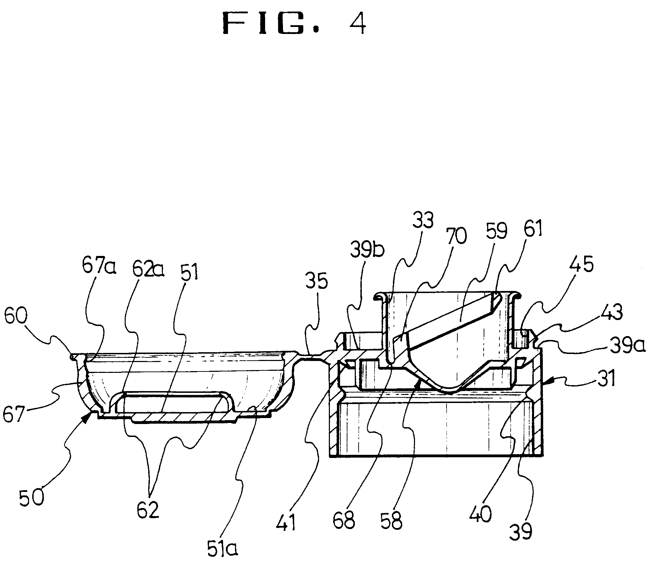

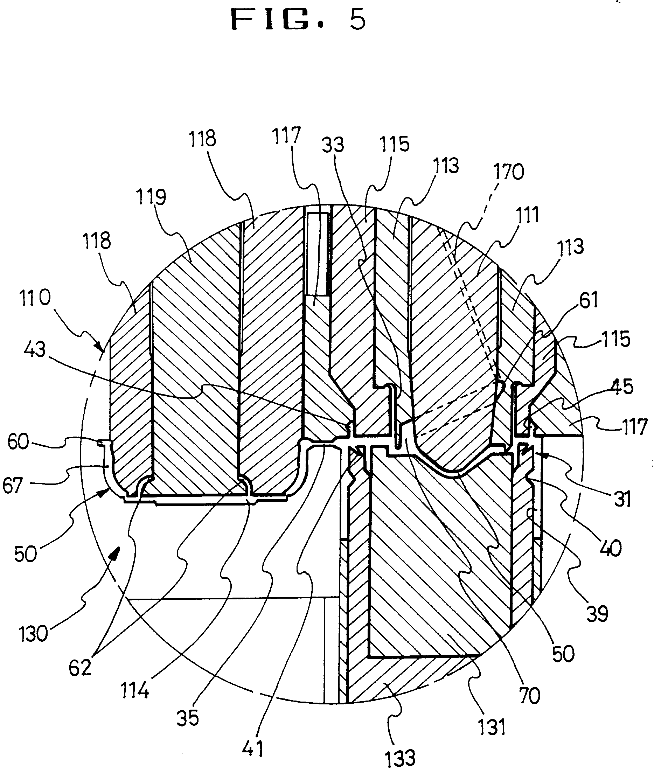

Figure 4 is a sectional view of a bottle cap according to a second embodiment of the present invention and Figure 5 is a sectional view of the top and bottom molds which are used for injection molding the cap of Figure 4. In the following description, the elements common to both the first and second embodiments will carry the same reference numerals.

In the caps of the first and second embodiments, the height of the mouth covering skirt 39 of the cap body 31 does not vary so that the forward and rear parts 39a and 39b of the skirt 39 have the same height. A click member 45 with a snap hook 43 is molded into the top of the skirt 39. The flared outside skirt 67 of the cover 50 is internally grooved at a position near the edge of the skirt 67, thus forming an annular snap groove 67a, which snaps into engagement with the snap hook 43 of the click member 45 when the cover 50 is folded over to cover the top of the cap body 31. In the same manner as described for the mouth covering skirt 39 of the cap body 31, the height of the flared skirt 67 of the cover 50 does not vary so that the forward and rear parts of the skirt 50 have the same height. The finger-operable protrusion 60, which is pulled upwardly by the finger of a user when opening the cover 50, is integrally molded with the skirt 67 of the cover 50. However, the height of the inside plug 62 in the cover 50 is lower than that of the flared skirt 67 and the edge 62a of the plug 62 is smoothly bent inwardly so that it can be easily inserted into the opening 33 in the cap body 31.

A tear-off piece 58 is provided on the cap body 31 in the lower section of the opening 33 which is formed by tearing groove 68. A pull-ring 61 with a hole 59 therein can be pulled upwardly by a user's finger when tearing off the piece 58 along the groove 68, is connected to the connection rib 70 of the piece 58. The ring 61 is positioned at an inclination to the opening 33.

The cap of the second embodiment is formed by an injection molding process using top and bottom molds 110 and 130 shown in Figure 5 which are spaced apart from each other to leave a cavity 114 of the same shape as the cap 50.

A plurality of cores for molding the cap body 31, connecting rib 35 and cover 50 are set in the top mold 110. In the top mold 110, a first top core 111 forms the top side of the tear-off piece 58 with the rib 70 and pull-ring 61. A second top core 113, which forms the inside wall of the inside cylinder of the cap body 31, surrounds the above first core 111. The opening 33 in the cap body 31 is defined by the above inside wall formed by the second core 113.

The first top core 111 is inclinedly holed in order to form a gate 170, through which liquid plastic is injected into the cavity 114. The gate 170 extends to a cavity part which corresponds to a part of the pull-ring 61 which is diametrically opposite the rib 70. The above second core 113 in turn is surrounded by a third top core 115, which forms both the outside wall of the inside cylinder and the inside wall of the click member 45 on the cap body 31. The above third core 115 is surrounded by a fourth top core 117, which forms both the outside wall of the click member 45 and the flexible connecting rib 35.

A fifth top core 119 forms the inside wall of the plug 62 of the cover 50 and is surrounded by a sixth top core 118, which forms both the outside wall of the plug 62 and the inside wall of the flared skirt 67 of the cover 50. That is, the inside plug 62 of the cover 50 is molded by the cores 118 and 119, while the flared skirt 67 of the cover 50 is molded by the core 118 cooperating with the bottom mold 130.

A plurality of cores are set in the bottom mold 130. In the bottom mold 130, a first bottom core 131, which forms the bottom side of the tear-off piece 58, is arranged under the first top core 111. The first bottom core 131 is surrounded by a second bottom core 133, which forms both the packing member 41 and the inside wall of the mouth covering skirt 39 of the cap body 31. The bottom mold 130 is also spaced apart from the fifth and sixth top cores 119 and 118 thus providing a cavity which forms the top wall 51 and annular surface 51a of the cover 50.

A bottle cap according to the second embodiment of this invention is injection-molded with the above molds 110 and 130 as follows.

In the injection molding process, the top and bottom molds 110 and 130 are used in conjunction with an injection molding machine (not shown). Thereafter, a measured quantity of hot liquid plastic under pressure is poured or injected into the cavity 114 between the molds 110 and 130 through the gate 170 of the core 111.

After a predetermined hardening time has passed since injecting the liquid plastic into the mold, the cores of the molds 110 and 130 are removed from the machine and the cap takes the shape of the cavity 114.

In the above injection molding process using the molds 110 and 130, the liquid plastic is injected into the cavity 114 through the gate 170, which extends to the cavity part corresponding to the pull-ring 61. The tensile strength of the ring 61 is thus higher than that of a ring formed by the molds with a gate extending to either the centre of the tear-off piece 58 or the rib 70.

When the pull-ring 61 with the high tensile strength is pulled upwardly by a user's finger, the tear-off piece 58 is easily torn off along the groove 68 without failure. In this case, the ring 61 is neither undesirably removed from the rib 70 nor broken.

As described above, the present invention provides a structurally-improved bottle cap in which the top cover 50 not only has an inside plug which can be tightly fitted into the opening of the cap body but it also has a snap groove, which tightly engages with a snap hook on the cap body. Therefore, the cap cannot be inadvertently opened so it reliably prevents undesirable leakage of liquid from a bottle 100 with a cap of the invention fitted thereto accidentally falls over onto its side or it falls from the surface on which it is standing.

This invention also provides an injection molding process for producing a bottle cap with a tear-off piece. In the process, the liquid plastic is injected into the top and bottom molds through a gate extending to the cavity corresponding to the pull-ring and thus has a high tensile strength so that the ring is neither undesirably separated from the tear-off piece nor breaks when the ring is forcibly pulled upward in order to remove the tear-off piece.

## Claims

1. A bottle cap **characterised by** a cap body (31) including an inner cylindrical portion adapted to fit into the mouth of the bottle and defining a liquid pouring opening (33) therein, an outer cylindrical mouth covering skirt (39) connected to said inner cylindrical portion by an annular connector (37), the top edge of said skirt being curved along its length to vary its height and providing two diametrically-opposed horizontal sections of different heights connected by a curved section (39a,39b,39c) and sealing means (41) between said skirt (39) and the annular connector (37) for sealingly engaging the lip of a bottle when the cap is fitted thereto to prevent undesirable leakage therefrom, a top cover (50) operable to close the opening (33) in the cap body (31), said cover including a cylindrical inside plug (53) adapted to fit into the liquid pouring opening (33) in the cap body to close said opening, and an outside skirt (57) integrally surrounding said inside plug (53) and having a curved edge shaped to fit into the curved edge of the mouth covering skirt (39) of the cap body (31), and a flexible connecting rib (35) integrally connecting the top cover (50) to the mouth covering skirt (39) of the cap body (31).

2. A bottle cap according to claim 1 characterised in that a click member (45) with an integral snap hook (43) extends upwardly from one or both horizontal sections of the top surface of the edge of the mouth covering skirt (39).

3. A bottle cap according to claim 1 or claim 2 characterised in that a snap groove (55) is provided on the inside surface of the skirt (57) of the cover (50) which is adapted to engage with the snap hook (43) of said click member (45).

4. A bottle cap as claimed in any preceding claim characterised in that a tear-off piece (58) is provided in the liquid pouring opening (33) to normally close said opening, said tear-off piece (58) including a tearing groove (68) and a finger-operable pull-ring (61) connected to said tear-off piece (58) by a connecting rib (70) for removing the tear-off piece along the tearing groove.

5. A bottle cap according to any preceding claim characterised in that the height of said inside plug (53) on the cover (51) is lower than that of said outside skirt (57).

6. A bottle cap comprising a cap body (31) including an inner cylindrical portion adapted to fit into the mouth of the bottle and defining a liquid pouring opening (33) therein, an outer cylindrical mouth covering skirt (39) connected to said inner cylindrical portion by an annular connector (37) and a flexible connecting rib (35) integrally connecting the top cover (50) to the mouth covering skirt (39) of the cap body (31), characterised in that the top edge of the skirt (39) is curved along its length to vary its height to providing two diametrically-opposed horizontal sections of different heights connected by a curved section (39a,39b,39c), the top cover (50) including a cylindrical inside plug (53) adapted to fit into the liquid pouring opening (33) in the cap body (31) to close said opening, and an outside skirt (57) surrounding said inside plug (53) and having a curved edge shaped to fit into the curved edge of the mouth covering skirt (39) of the cap body (31).

7. A process for producing a bottle cap including a tear-off piece and a pull-ring (61) connected thereto by means of a rib, said process comprising the steps of injecting liquid plastic into a cavity between top and bottom molds (110,130) through a gate (170) extending to a cavity (114) corresponding to a part of said pull-ring (61), said part of the ring being diametrically opposite to said rib (70).
